# EUROPEAN PATENT SPECIFICATION

(11) **EP 2 866 332 B1**
(45) Date of publication and mention of the grant of the patent: **27.04.2016**
(21) Application number: 13190459.1
(22) Date of filing: 28.10.2013
(51) Int. Cl.: H02K 9/14, H02K 9/12, F28F 9/02, F28D 7/16

(54) **An air-to-air heat exchanger**
Luft-Luft-Wärmetauscher
Échangeur de chaleur air-air

(43) Date of publication of application: 29.04.2015
(73) Proprietor: ABB Technology AG, 8050 Zürich (CH)
(72) Inventor: Halme, Matti, 00380 Helsinki (FI); Sundström, Jani, 00710 Helsinki (FI); Härkönen, Tuomas, 00380 Helsinki (FI); Raute, Rami, 00980 Helsinki (FI)
(74) Representative: Kolster Oy Ab

(56) References cited:
- EP-A1- 0 299 908
- WO-A1-2012/045358
- US-A- 2 338 593

## Description

### FIELD OF THE INVENTION

The present invention relates to an air-to-air heat exchanger according to the preamble of claim 1. EP 0 299 908 discloses such a heat exchanger.

Air-to-air heat exchangers are used in many applications to cool an apparatus producing heat. E.g. electric machines are normally constructed under the assumption that the operating temperature of the electric machine remains under 40 degrees Celsius. Small electric machines can be cooled with a fan attached to the shaft of the electric machine and blowing external air that surrounds the electric machine through the electric machine. Bigger electric machines are normally provided with a heat exchanger for cooling the electric machine. The heat exchanger also makes it possible to close the inner air circulation within the machine. The heat exchanger could be a water-to-air heat exchanger or an air-to-air heat exchanger. A water-to-air heat exchanger is normally more efficient compared to an air-to-air heat exchanger, but there are many applications where water is to be avoided. An air-to-air heat exchanger is thus often the only option that can be used in a certain application.

The present invention is related to an air-to-air heat exchanger that can advantageously be used in connection with an electric machine. The heat exchanger is provided with an external air circulation and an internal air circulation. The internal air circulation circulates air in a closed circulation from the electric machine to the heat exchanger and back to the electric machine. The external air circulation circulates cooling air through the heat exchanger. The internal air circulates between the heat exchanger and the electric machine so that the internal air is cooled in the heat exchanger by the external air during each cycle.

### BACKGROUND ART

EP patent application 2 495 849 discloses a rotating machine with a heat exchanger. The rotating machine drives a shaft extending in an axial direction and being provided with at least one fan. A heat exchanger is disposed in thermal communication with the rotating machine. The heat exchanger comprises pipes passing in a traverse direction in respect to the axial direction. The heat exchanger comprises further an inlet housing at one end of the pipes and an outlet housing at the opposite end of the pipes. The inlet and the outlet housings extend along the axial length of the heat exchanger. A duct passes form the fan to the inlet housing. Air can thus be directed with the fan through the duct to the inlet housing and further in the traverse direction through the pipes to the outlet housing. The air is then discharged in the traverse direction from the outlet housing.

US patent 5,844,333 discloses an air cooler for an enclosed frame motor. The arrangement comprises an electric motor having a shaft extending in an axial direction within a second housing and a heat exchanger within a first housing above the first housing. The heat exchanger comprises two heat exchange units within the second housing. The two heat exchange units form an A-shaped configuration. Each heat exchange unit comprises pipes extending in a traverse direction in relation to the axial direction. The pipes extend between the side walls of the second housing. A middle section is formed between the heat exchange units and an end section is formed at both ends of the first housing. There is an intake plenum at one side of the first housing and an exhaust plenum at the opposite side of the first housing. The external air circulation and the internal air circulation disclosed in this US patent will be explained in the following.

The external air circulation is blown with a fan located on the shaft of the electric motor into the intake plenum through an intake opening in the intake plenum positioned at a first end of the first housing. The ambient air flows from the intake plenum through the pipes in the heat exchange units into the opposite exhaust plenum and further out from the exhaust plenum through an outlet opening in the exhaust plenum positioned at a second opposite end of the first housing. The external air circulation is thus depending on the rotational speed of the electric motor.

The internal air circulation in the form of heated motor air flows from the electric motor to be cooled upwards to the middle section of the heat exchanger. The heated motor air is circulated by an internal fan and divided in the middle section of the heat exchanger into two branches. A first branch flows across the pipes in the first heat exchange unit to the first end section and further downwards in the first end section into a first end of the electric machine. A second branch flows across the pipes in the second heat exchange unit to the second end section and further downwards in the second end section into a second opposite end of the electric machine. Both branches flow from opposite ends of the electric motor into axial air passages in the rotor and further though radial air passages in the rotor to the air gap between the rotor and the stator and further through radial air passages in the stator to the middle section of the heat exchanger. A new cooling cycle begins when the hot air again enters from the stator to the middle section of the heat exchanger.

One problem in these prior art heat exchangers is the unevenness in the cooling. The external cooling air passes from the inlet end of the pipes in the heat exchange units to the outlet end of the pipes in the heat exchange units. The temperature of the cooling air will thus rise constantly from the inlet end towards the outlet end when the internal air i.e. the heated motor air passes across the pipes. The internal air will thus be cooled unevenly in the traverse direction of the electric machine. The cooling is more efficient at the inlet end of the pipes compared to the cooling at the outlet end of the pipes.

### BRIEF DESCRIPTION OF THE INVENTION

An object of the present invention is to achieve an improved air-to-air heat exchanger.

The air-to-air heat exchanger according to the invention is characterized by what is stated in the characterizing portion of claim 1.

The air-to-air heat exchanger comprises:
a first housing comprising two opposite end walls, two opposite side walls, a floor, and a ceiling,
two heat exchange units comprising air channels extending between the side walls of the first housing, the two heat exchange units dividing the interior of the first housing into a middle section situated between the two heat exchange units and two end sections situated between the respective end wall of the housing and the respective heat exchange unit.

The heat exchanger is characterized in that it comprises further:
a side duct at each side of the housing extending along the respective side wall of the housing and comprising a first end and a second opposite end, said side duct being divided by a partition wall extending between the first end and the second opposite end of the side duct into an upper compartment and a lower compartment, said side duct comprising an inlet opening at the first end of the side duct in one of the compartments and an outlet opening at the second end of the side duct in the opposite compartment in relation to the inlet opening.

An exterior air circulation is directed into the heat exchanger from the inlet openings of both side ducts into the respective compartment in the side duct and further along the air channels in the heat exchange units to the corresponding compartment in the opposite side duct and further through the outlet opening in the opposite side duct out of the heat exchanger.

An internal air circulation is directed from an apparatus to be cooled positioned below the first housing through air passages in a middle portion of the floor of the first housing and further upwards in the middle section of the first housing where the internal air circulation is divided into a first branch passing across the first heat exchange unit in the first housing to the first end section in the first housing and further downwards through air passages in a first end portion of the floor of the first housing back to a first end of the apparatus to be cooled and a second branch passing across the second heat exchange unit in the first housing to the second end section in the first housing and further downwards through air passages in a second end portion of the floor of the first housing back to an opposite second end of the apparatus to be cooled.

The use of side ducts that have two compartments makes it possible to use two different outer air circulations that flow in the opposite direction in the heat exchange units. A first outer air circulation can be directed from an inlet opening to the upper compartment in the first side duct and a second outer air circulation can be directed from an inlet opening to the lower compartment in the second side duct. The first outer circulation will flow in the air channels in the upper portion of the heat exchange units in a first direction to the upper compartment in the second opposite side duct. The second outer circulation will flow in the air channels in the lower portion of the heat exchange units in a second opposite direction to the lower compartment in the first opposite side duct. This means that an evener average heat distribution can be achieved in the air channels in the heat exchange units. The temperature of the first external air circulation flowing in the upper portion of the heat exchange units will rise in the direction from the first side duct to the second side duct. The temperature of the second external air circulation flowing in the lower portion of the heat exchange units will rise in the direction from the second side duct to the first side duct. The result of this is an evener cooling of the apparatus to be cooled.

The first external air circulation can be provided with a first fan and the second external air circulation can be provided with a second fan. Both fans can be positioned at the first end of the side ducts. Radial fans can be used here. One radial fan is mounted at the upper compartment of the side duct and the other radial fan is mounted at the lower compartment of the opposite side duct. This means that there will be empty space between the radial fans at the first end wall of the first housing. A driving motor for a fan positioned within the first end section of the first housing for circulating internal air can thus be mounted in said space. A driving motor for a corresponding fan positioned within the second end section of the first housing for circulating internal air can also be mounted on the opposite second end wall of the first housing between the outlet openings.

The electric machine to be cooled by the heat exchanger is advantageously a generator in a wind turbine. The space within the nacelle in a wind turbine is limited. This means that the heat exchanger must be compact in order to fit into the nacelle with the electric generator. Also the housing of the heat exchanger and the housing of the generator must be compact. The connection of the incoming cooling air to the heat exchanger and the connection of the outgoing cooling air from the heat exchanger are normally both in the axial direction in a wind turbine.

### BRIEF DESCRIPTION OF THE DRAWINGS

In the following the invention will be described in greater detail by means of preferred embodiments with reference to the attached drawings, in which:
Figure 1 is an axonometric exploded view showing the main parts of an air-to-air heat exchanger according to the invention.
Figure 2 is an axonometric view showing the heat exchanger of figure 1 in an assembled form.
Figure 3 is a first horizontal cross section showing the upper portion of the heat exchanger in figures 1 and 2.
Figure 4 is a second horizontal cross section showing the lower portion of the heat exchanger in figures 1 and 2.
Figure 5 is a horizontal cross section showing a second embodiment of the heat exchanger.
Figure 6 is a vertical cross section showing a heat exchanger according to the previous figures used for cooling an electric machine.

### DETAILED DESCRIPTION OF THE INVENTION

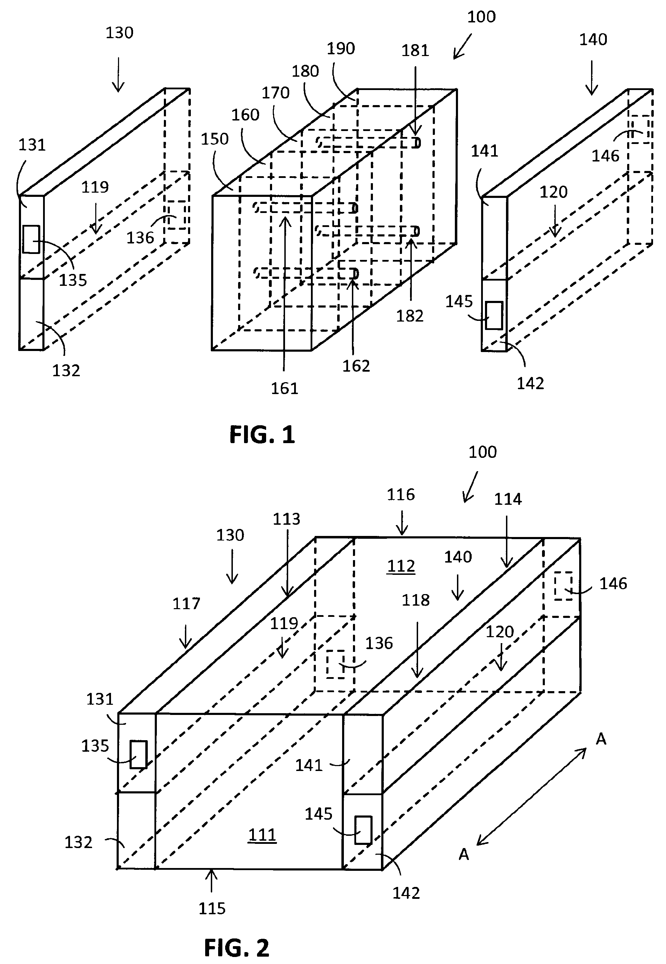

Figure 1 is an axonometric exploded view showing the main parts of an air-to-air heat exchanger according to the invention. Figure 2 is an axonometric view showing the heat exchanger of figure 1 in an assembled form.

The air-to-air heat exchanger comprises a first housing 100 comprising two opposite end walls 111, 112, two opposite side walls 113, 114, a floor 115, and a ceiling 116. The end walls 111, 112, the side walls 113, 114, the floor 115 and the ceiling 116 form a rectangular volumetric enclosure. The side walls 113, 114 of the first housing 100 extend in an axial direction A-A. The end walls 111, 112 of the first housing 100 extend in a traverse direction in relation to the axial direction A-A.

The heat exchanger comprises further two heat exchange units 160, 180 comprising air channels 161, 162, 181, 182 extending between the side walls 113, 114 of the first housing 100. The two heat exchange units 160, 180 divide the interior of the first housing 100 into a middle section 170 situated between the two heat exchange units 160, 180 and two end sections 150, 190 situated between the respective end wall 111, 112 of the housing 100 and the respective heat exchange unit 160, 180. There are openings in the side walls 113, 114 of the first housing 100 receiving the ends of the air channels 161, 162, 181, 182. The circumference of the end of each air channel 161, 162, 181, 182 is sealed to the corresponding opening in the side walls 113, 114. The air channels 161, 162, 181, 182 extend in the traverse direction in relation to the axial direction A-A. The figure shows only two air channels 161, 162, 181, 182 in each heat exchange unit 160, 180, but there are naturally a plurality of air channels 161, 162, 181, 182 in each heat exchange unit 160, 180. The air channels 161, 162, 181, 182 can be positioned at a distance from each other in vertical and/or horizontal rows forming any pattern. The air channels 161, 162, 181, 182 are positioned along the whole height of the heat exchange unit 160, 180 from the floor 115 to the ceiling 116 and along the whole length of the respective heat exchange unit 160, 180 in the axial direction A-A.

The middle section 170 and the two end sections 150, 190 in the first housing 100 are advantageously empty spaces. Both end sections 150, 190 communicate with the middle section 170 through air passages formed between the air channels 161, 162, 181, 182 in the heat exchange units 160, 180.

The heat exchanger comprises further a side duct 130, 140 at each side wall 113, 114 of the housing 100 extending in the axial A-A direction along the respective side wall 113, 114 of the housing 100. Each side duct 130, 140 comprises a first end 130A, 140A and a second opposite end 130B, 140B. Each side duct 130, 140 is divided by a partition wall 119, 120 extending between the first end 130A, 140A and the second opposite end 130B, 140B of the side duct 130, 140 into an upper compartment 131, 141 and a lower compartment 132, 142. Each side duct 130, 140 comprises further an inlet opening 135, 145 at the first end 130A, 140A of the side duct 130, 140 in one of the compartments 131, 132, 141, 142 and an outlet opening 136, 146 at the second end 130B, 140B of the corresponding compartment 131, 132, 141, 142 in the opposite side duct 130, 140. The first side duct 130 i.e. the side duct 130 to the left in the figures comprises an inlet opening 135 in the upper compartment 131 and an outlet opening 136 in the lower compartment 132. The second side duct 140 i.e. the side duct 140 to the right in the figures comprises an inlet opening 145 in the lower compartment 142 and an outlet opening 146 in the upper compartment 141. The ends of the air channels 161, 162, 181, 182 open into a respective compartment 131, 132, 141, 142 in the side ducts 130, 140. The air channels 161, 162, 181, 182 positioned in the lower portion in each heat exchange unit 160, 180 open into the lower compartment 132, 142 in the side ducts 130, 140. The air channels 161, 162, 181, 182 positioned in the upper portion in each heat exchange unit 160, 180 open into the upper compartment 131, 141 in the side ducts 130, 140. The interior of the first housing 100 and the interior of the side channels 130, 140 are thus isolated from each other i.e. no air can pass between these. The air passes between the side ducts 130, 140 only through the air channels 161, 162, 181, 182.

The situation could naturally be reversed so that the first side duct 130 i.e. the side duct 130 to the left in the figures would comprises an inlet opening 135 in the lower compartment 132 and an outlet opening 136 in the upper compartment 131. The second side duct 140 i.e. the side duct 140 to the right in the figures would in such case comprises an inlet opening 145 in the upper compartment 141 and an outlet opening 146 in the lower compartment 142.

The side ducts 130, 140 are formed by outer side walls 117, 118 being parallel with the side walls 113, 114 of the first housing 100. Each side duct 130, 140 comprises further two end walls, a floor and a ceiling. The two end walls, the floor and the ceiling in the side ducts 130, 140 are advantageously made up of the end walls 111, 112, the floor 115 and the ceiling 116 of the first housing 100, which extend beyond the side walls 113, 114 of the first housing 100. The partition walls 119, 120 in each side duct 130, 140 are made up of separate parts installed into the side ducts 130, 140. The interior of the upper compartment 131, 141 and the lower compartment 132, 142 in each side duct 130, 140 are also isolated from each other i.e. no air can pass between these.

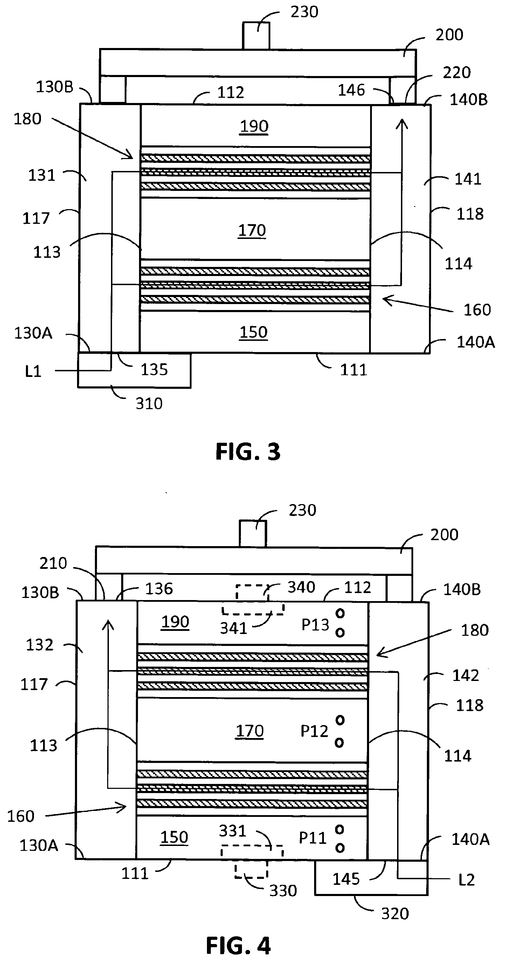

Figure 3 is a first horizontal cross section showing the upper portion and figure 4 is a second horizontal cross section showing the lower portion of the heat exchanger in figures 1 and 2.

A first external cooling air circulation L1 is directed into the heat exchanger with a first cooling air fan 310 to the inlet opening 135 at the first end 130A of the first side duct 130. The first external cooling air circulation L1 passes from the inlet opening 135 into the upper compartment 131 of the first side duct 130 and further through the air channels 161, 162, 181, 182 in the upper portion of the two heat exchange units 160, 180 to the upper compartment 141 in the second side duct 140. The first external cooling air circulation L1 passes then out from the upper compartment 141 in the second duct 140 through the outlet opening 146 in the second end 140B of the second side duct 140.

A second external cooling air circulation L2 is directed into the heat exchanger with a second fan 320 to the inlet opening 145 at the first end 140A of the second side duct 140. The second external cooling air circulation L2 passes from the inlet opening 145 into the lower compartment 142 of the second side duct 140 and further through the air channels 161, 162, 181, 182 in the lower portion of the two heat exchange units 160, 180 to the lower compartment 132 in the first side duct 130. The second external cooling air circulation L2 passes then out from the lower compartment 132 in the first side duct 130 through the outlet opening 136 at the second end 130B of the first side duct 130.

The first L1 and the second L2 external cooling air circulation can be taken from the space where the heat exchanger is situated or from an exterior space or from the outdoor air.

The first L1 and the second L2 external cooling air circulation are lead out from the heat exchanger at the second ends 130B, 140B of the side channels 130, 140. The outlet openings 136, 146 can be connected together by a junction duct 200 positioned at the second ends 130B, 140B of the side channels 130, 140. The junction duct 200 has two inlet openings 210, 220 positioned at the outlet openings 136, 146 of the side ducts 130, 140 and one common outlet opening 230 positioned in the middle between the inlet openings 210, 220. The combined external air circulation L1, L2 can be directed from the outlet opening 230 further into the space where the heat exchanger is situated or with air channels to an exterior space or to the outdoor air.

The first L1 and the second L2 external air circulation pass thus in an opposite direction through the respective air channels 161, 162, 181, 182 in the heat exchange units 160, 180. This means that an evener heat distribution can be achieved across the air channels 161, 162, 181, 182 in the heat exchanger. The temperature of the first external air circulation L1 rises when the first external air circulation L1 passes in the air channels 161, 162, 181, 182 in the upper portion of the heat exchange units 160, 180 from the first side duct 130 to the second side duct 140. The temperature of the second external air circulation L2 rises when the second external air circulation L2 passes in the air channels 161, 162, 181, 182 in the lower portion of the heat exchange units 160, 180 from the second side duct 140 to the first side duct 130. The average temperature of the external air circulation L1, L2 in the air channels 161. 162, 181, 182 will be evener between the side walls 113, 114 of the first housing 100 compared to a situation where the external air circulation L1, L2 would pass only in one direction in the air channels 161, 162, 181, 182 in the heat exchange units 160, 180.

An internal air circulation L10 can be directed from an apparatus to be cooled situated under the heat exchanger upwards through air passages P12 in the middle portion of the floor 115 of the first housing 100. The internal air circulation L10 passes further upwards in the middle section 170 in the heat exchanger. The internal air circulation L10 is in the middle section 170 divided into a first branch L11 directed across the first heat exchange unit 160 into the first end section 150 of the heat exchanger and into a second branch L12 directed across the second heat exchange unit 180 into the second end section 190 of the heat exchanger. The first branch L11 is cooled when it passes from the middle section 170 to the first end section 150 across the outer surface of the air channels 161, 162 in the first heat exchange unit 160. The second branch L12 is cooled when it passes from the middle section 170 to the second end section 190 across the outer surface of the air channels 181, 182 in the second heat exchange unit 180. The first branch L11 of the internal air circulation L10 will then pass downwards in the first end section 150 of the heat exchanger and further through air passages P11 in the first end portion of the floor 115 to a first end of the apparatus to be cooled. The second branch L12 of the internal air circulation L10 will pass downwards in the second end section 190 of the heat exchanger and further through air passages P13 in the second end portion of the floor 115 to the apparatus to be cooled. The first L11 and the second L12 branch of the internal air circulation L10 will then pass across the apparatus to be cooled and start a new circulation cycle.

The internal air circulation L10 can be achieved without the use of fans. The rotating rotor 30 of the electric machine 10 will in many cases be able to produce enough pressure to maintain the internal air circulation L10. It is, however also possible to use fans in the internal air circulation L10. Figures 3 and 4 show a first driving motor 330 and a circulating air fan 331 in connection with the first end wall 111 of the first housing 100 and a second driving motor 340 and a circulating air fan 341 in connection with the second end wall 112. The cooling air fans 310, 320 used to produce the external air circulations L1, L2 are positioned in the diagonal corners of the first end wall 111. This means that there is enough room in the middle of the first end wall 111 for a first driving motor 330. The first circulating air fan 331 is situated within the first end section 150 and connected to the shaft of the first driving motor 330. The second driving motor 340 is positioned in a corresponding way in the middle of the second end wall 112 and the second circulating air fan 341 is positioned within the second end section 190. The junction duct 200 connecting the outlet openings 136, 146 at the second ends 130B, 140B of the side ducts 130, 140 leaves enough room for the second driving motor 340 to be fitted to the second end wall 112 of the first housing 100.

The length in the axial direction A-A of the first end section 150 is advantageously the same as the length of the second end section 190. The length in the axial direction A-A of the middle section 170 equals advantageously to the sum of the length of the first end section 150 and the length of the second end section 190.

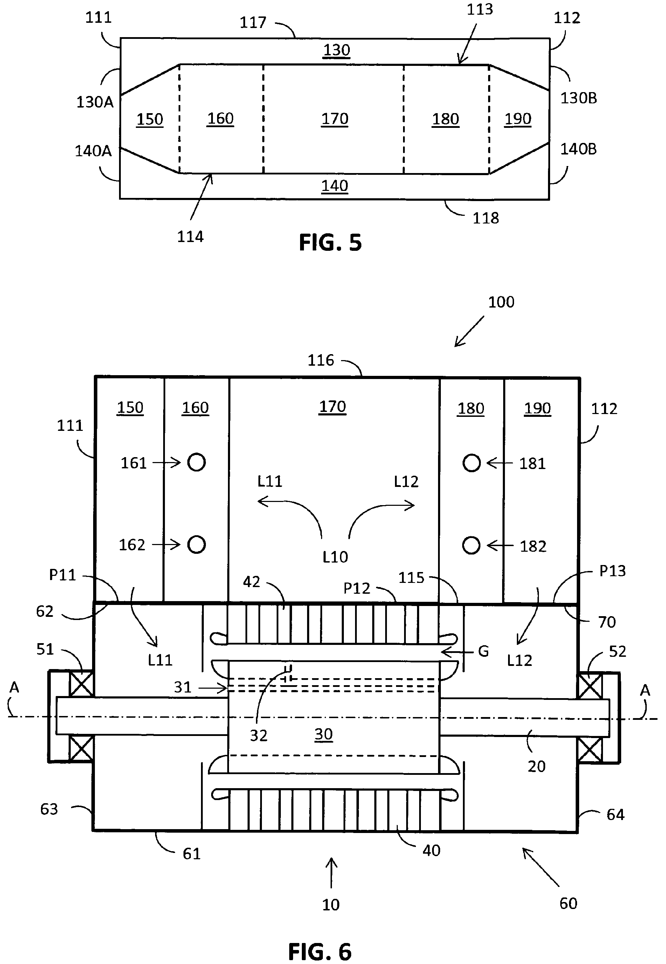

Figure 5 is a horizontal cross section showing a second embodiment of the heat exchanger. The difference is in the form of the side ducts 130, 140. The side ducts 130, 140 have in the previous figures the same width along the whole length of the side ducts 130, 140 between the end walls 111, 112 of the first housing 100. The side walls 113, 114 of the first housing 100 are in this second embodiment inclined towards the middle within both end sections 150, 190 of the heat exchanger. This means that the first ends 130A, 140A and the second ends 130B, 140B of the side ducts 130, 140 are wider than the rest of the ducts 130, 140. A wider first end 130A, 140A might be needed in order to fit the fans 310, 320 at the inlet openings 135, 145 at the first end 130A, 140A of the ducts 130, 140. The wider second end 130B, 140B might on the other hand be needed in order to achieve a compact connection of the outlet openings 136, 146 at the second end 130B, 140B of the side ducts 130, 140. This second embodiment makes it possible to keep the width of the side ducts 130, 140 as small as possible and still have enough room for the fans 310, 320 at the first ends 130A, 140A of the side ducts 130, 140.

Figure 6 is a vertical cross section showing a heat exchanger according to the previous figures for cooling an electric machine.

An electric machine 10 is provided within a second housing 60 having a rectangular form and being provided with a floor 61, a ceiling 62, two end walls 43, 44 and two side walls 45, 46. The second housing 60 forms thus a closed space around the electric machine 10. The second housing 60 is positioned under the first housing 100 so that the floor 115 of the first housing 100 rests of the ceiling 62 of the second housing 60. The floor 115 of the first housing 100 and the ceiling 62 of the second housing 60 can form a single separation wall 70 between the first housing 100 and the second housing 60. The separation wall 70 is provided with air passages P11, P12, P13 allowing air to pass between the first housing 100 and the second housing 60.

The electric machine 10 comprises a rotor 30 fitted on a rotatable shaft 20. The shaft 20 is supported at both ends on bearings 51, 52. The shaft 20 has a centre axis A-A. The electric machine 10 comprises further a stator 40 surrounding the rotor 30. The electric machine 10 can be a generator or a motor. The rotor 30 is provided with axial A-A air channels 31 and radial air channels 32. The axial air channels 31 open into the radial air channels 32. The stator 40 is provided with radial air channels 41. Air can thus be directed from a first end and from a second opposite end of the rotor 30 into the axial air channels 31 and further from the axial air channels 31 to the radial air channels 32. The air will then pass from the radial air channels 32 of the rotor 30 through the gap G between the rotor 30 and the stator 40 to the radial air channels 42 in the stator 40.

The hot air form the electric machine 10 will further pass from the radial air channels 42 in the stator 40 through the air passages P12 in the middle portion of the separation wall 70 into the middle section 170 in the heat exchanger. The internal air circulation L10 will then circulate between the electric machine 10 and the heat exchanger as described in connection with the previous figures. The first branch L11 of the internal air circulation L10 passes downwards in the first end section 150 of the heat exchanger and through the air passages P11 in the first end of the separation wall 70 to a first end of the electric machine 10. The second branch L12 of the internal air circulation L10 passes downwards in the second end section 190 of the heat exchanger and through air passages P13 in the second end of the separation wall 70 to a second opposite end of the electric machine 10. The first L11 and the second L12 branch of the internal air circulation L10 will then pass through the electric machine 10 from the rotor 30 to the stator 40 and further to the heat exchanger in order to start a new circulation cycle.

A vertical cross section of the air channels 161, 162, 181, 182 is advantageously circular i.e. the air channels 161, 162, 181, 182 are pipes. The cross section of the air channels 161, 162, 181, 182 could, however, also be of some other format e.g. elliptic, oval or rectangular. The air channels 161, 162, 181, 182 can be positioned in horizontal and vertical rows forming a regular pattern, but also any other pattern is possible. The pattern could be e.g. such that each other horizontal row of air channels 161, 162, 181, 182 is displaced so that the air channels 161, 162, 181, 182 are positioned vertically between the air channels 161, 162, 181, 182 in the adjacent horizontal rows.

The first housing 100 and the second housing 60 are advantageously formed as rectangular boxes. It is practical to use rectangular boxes and an electric machine can easily be enclosed in a rectangular housing. The first housing 100 and/or the second housing 60 could, however, be of any form.

The side ducts 130, 140 are also advantageously formed as rectangular boxes. The side ducts 130, 140 could, however, be of any form. The side ducts 130, 140 extend in the figures between the end walls 111, 112 of the first housing 100. This is a practical solution as the end walls 111, 112, the floor 115 and the ceiling 116 of the first housing 100 can extend beyond the side walls 113, 114 of the first housing 100 in order to form end walls, a floor and a ceiling in each side duct 130, 140. The side ducts 130, 140 could, however, also be shorter and extend only between the heat exchange units 160, 160 in the heat exchanger. The side ducts 130, 140 might then have to be wider in order to have enough space for the fans 310, 320 in the external air circulation L1, L2.

The internal circulation L10 can be achieved without the use of fans. The rotating rotor 30 of the electric machine 10 will in many cases be able to produce enough pressure to maintain the internal air circulation L10. It is, however, naturally possible to intensify the internal air circulation L10 by using one or several fans.

The electric machine 10 is advantageously a generator in a wind turbine.

The invention and its embodiments are not limited to the examples described above but may vary within the scope of the claims.

## Claims

1. An air-to-air heat exchanger comprising:
a first housing (100) comprising two opposite end walls (111, 112), two opposite side walls (113, 114), a floor (115), and a ceiling (116),
two heat exchange units (160, 180) comprising air channels (161, 162, 181, 182) extending between the side walls (113,114) of the first housing (100), the two heat exchange units (160, 180) dividing the interior of the first housing (100) into a middle section (170) situated between the two heat exchange units (160, 180) and two end sections (150, 190) situated between the respective end wall (111, 112) of the housing (100) and the respective heat exchange unit (160, 180),
the heat exchanger comprises further:
a side duct (130, 140) at each side of the housing (100) extending along the respective side wall (113, 114) of the housing (100) and comprising a first end (130A, 140A) and a second opposite end (130B, 140B), **characterized in that** said side duct (130, 140) being divided by a partition wall (119, 120) extending between the first end (130A, 140A) and the second opposite end (130B, 140B) of the side duct (130, 140) into an upper compartment (131, 141) and a lower compartment (132, 142), said side duct (130, 140) comprising an inlet opening (135, 145) at the first end (130A, 140A) of the side duct (130, 140) in one of the compartments (131, 132, 141, 142) and an outlet opening (136, 146) at the second end (130B, 140B) of the corresponding compartment (131, 132, 141, 142) in the opposite side duct (130, 140).

2. An air-to-air heat exchanger according to claim 1, **characterized in that**:
an external cooling air circulation (L1, L2) is directed into the heat exchanger from the inlet openings (135, 145) of both side ducts (130, 140) into the respective compartment (131, 132, 141, 142) in the side duct (130, 140) and further through the air channels (161, 162, 181, 182) in the heat exchange units (160, 180) to the corresponding compartment (131, 132, 141, 142) in the opposite side duct (130, 140) and further through the outlet opening (136, 146) in the opposite side duct (130, 140) out of the heat exchanger,
an internal air circulation (L10) is directed from an apparatus to be cooled positioned below the first housing (100) through air passages (P12) in a middle portion of the floor (115) of the first housing (100) and further upwards in the middle section (170) of the first housing (100) where the internal air circulation (L10) is divided into a first branch (L11) passing across the first heat exchange unit (160) in the first housing (100) to the first end section (150) in the first housing (100) and further downwards through air passages (P11) in a first end portion of the floor (115) of the first housing (100) back to a first end of the apparatus to be cooled and a second branch (L12) passing across the second heat exchange unit (180) in the first housing (100) to the second end section (190) in the first housing (100) and further downwards through air passages (P13) in a second end portion of the floor (115) of the first housing (100) back to an opposite second end of the apparatus to be cooled.

3. An air-to-air heat exchanger according to claim 1 or 2, **characterized in that** the air channels (161, 162, 181, 182) are formed of pipes having a circular cross section.

4. An air-to-air heat exchanger according to any one of claims 1 to 3, **characterized in that** a cooling air fan (310, 320) is positioned at each inlet opening (135, 145) for providing external cooling air (L1, L2) to the heat exchanger.

5. An air-to-air heat exchanger according to any one of claims 1 to 4, **characterized in that** a circulating air fan (331, 341) is positioned within each end section (150, 190) of the first housing (100) for providing circulation of the internal air between the heat exchanger and the apparatus to be cooled.

6. An air-to-air heat exchanger according to claim 5, **characterized in that** each circulating air fan (331, 341) is driven by a driving motor (330, 340) positioned outside the first housing (100) at each end wall (111, 112) of the first housing (100).

7. An air-to-air heat exchanger according to any one of claims 1 to 6, **characterized in that** the outlet openings (136, 146) at the second end (130B, 140B) of the side ducts (130, 140) are connected with a junction duct (200).

8. An air-to-air heat exchanger according to any one of claims 1 to 7, **characterized in that** the heat exchanger is used to cool an electric machine (10) comprising a rotor (30) on a rotatable shaft (20) having a centre axis (A-A) extending in the direction of the side walls (113, 114) of the first housing (100) and a stator (40) surrounding the rotor (30), the electric machine (10) being positioned within a second housing (60), whereby hot air from the electric machine (10) is directed to air passages (P12) in the middle section of the floor (115) of the first housing (100) and the return air from the heat exchanger is returned through air passages (P11, P13) at both end sections of the floor (115) of the first housing (100) to the opposite ends of the electric machine (10).

## Patentansprüche

1. Luft-Luft-Wärmetauscher mit:
einem ersten Gehäuse (100), das zwei gegenüberliegende Stirnwände (111, 112), zwei gegenüberliegende Seitenwände (113, 114), einen Boden (115) und ein Dach (116) aufweist,
zwei Wärmetauschereinheiten (160, 180), die Luftkanäle (161, 162, 181, 182) aufweisen, die sich zwischen den Seitenwänden (113, 114) des ersten Gehäuses (100) erstrecken, welche zwei Wärmetauschereinheiten (160, 180) das Innere des ersten Gehäuses (100) in einen zwischen den zwei Wärmetauschereinheiten (160, 180) befindlichen mittleren Abschnitt (170) und zwischen der jeweiligen Stirnwand (111, 112) des Gehäuses (100) und der jeweiligen Wärmetauschereinheit (160, 180) befindliche zwei Endabschnitte (150, 190) einteilt,
wobei der Wärmetauscher ferner:
ein Seitenrohr (130, 140) auf jeder Seite des Gehäuses (100) aufweist, das sich entlang der jeweiligen Seitenwand (113, 114) des Gehäuses (100) erstreckt und ein erstes Ende (130A, 140A) und ein zweites, gegenüberliegendes Ende (130B, 140B) aufweist, **dadurch gekennzeichnet, dass** das besagte Seitenrohr (130, 140) durch eine Trennwand (119, 120) eingeteilt wird, die sich zwischen dem ersten Ende (130A, 140A) und dem zweiten, gegenüberliegenden Ende (130B, 140B) des Seitenrohres (130, 140) in eine obere Abteilung (131, 141) und eine untere Abteilung (132, 142) erstreckt, welches besagte Seitenrohr (130, 140) eine Eintrittsöffnung (135, 145) am ersten Ende (130A, 140A) des Seitenrohres (130, 140) in einer der Abteilungen (131, 132, 141, 142) und eine Austrittsöffnung (136, 146) am zweiten Ende (130B, 140B) der entsprechenden Abteilung (131, 132, 141, 142) im gegenüberliegenden Seitenrohr (130, 140) aufweist.

2. Luft-Luft-Wärmetauscher nach Patentanspruch 1, **dadurch gekennzeichnet, dass**
eine externe Kühlluftzirkulation (L1, L2) in den Wärmetauscher aus den Eintrittsöffnungen (135, 145) der beiden Seitenrohre (130, 140) in die jeweilige Abteilung (131, 132, 141, 142) im Seitenrohr (130, 140) und weiter durch die Luftkanäle (161, 162, 181, 182) in den Wärmetauschereinheiten (160, 180) in die entsprechende Abteilung (131, 132, 141, 142) im gegenüberliegenden Seitenrohr (130, 140) und weiter durch die Austrittsöffnung (136, 146) im gegenüberliegenden Seitenrohr (130, 140) aus dem Wärmetauscher geleitet wird,
eine interne Luftzirkulation (L10) von einer unter dem ersten Gehäuse (100) positionierten zu kühlenden Vorrichtung durch Luftdurchlässe (P12) in einem mittleren Teil des Bodens (115) des ersten Gehäuses (100) und weiter nach oben im mittleren Abschnitt (170) des ersten Gehäuses (100) geleitet wird, wo die interne Luftzirkulation (L10) in einen ersten Zweig (L11), der über die erste Wärmetauschereinheit (160) im ersten Gehäuse (100) zum ersten Endabschnitt (150) im ersten Gehäuse (100) und weiter nach unten durch Luftdurchlässe (P11) in einem ersten Endteil des Bodens (115) des ersten Gehäuses (100) zurück zu einem ersten Ende der zu kühlenden Vorrichtung verläuft, und einen zweiten Zweig (L12) eingeteilt wird, der über die zweite Wärmetauschereinheit (180) im ersten Gehäuse (100) zum zweiten Endabschnitt (190) im ersten Gehäuse (100) und weiter nach unten durch Luftdurchlässe (P13) in einem zweiten Endabschnitt des Bodens (115) des ersten Gehäuses (100) zurück zu einem gegenüberliegenden zweiten Ende der zu kühlenden Vorrichtung verläuft.

3. Luft-Luft-Wärmetauscher nach Patentanspruch 1 oder 2, **dadurch gekennzeichnet, dass** die Luftkanäle (161, 162, 181, 182) aus Rohren mit einem kreisförmigen Querschnitt bestehen.

4. Luft-Luft-Wärmetauscher nach einem der Patentansprüche 1 bis 3, **dadurch gekennzeichnet, dass** ein Kühlluftgebläse (310, 320) an jeder Eintrittsöffnung (135, 145) positioniert wird, um den Wärmetauscher mit externer Kühlluft (L1, L2) zu versorgen.

5. Luft-Luft-Wärmetauscher nach einem der Patentansprüche 1 bis 4, **dadurch gekennzeichnet, dass** ein Umluftgebläse (331, 341) innerhalb jedes Endabschnitts (150, 190) des ersten Gehäuses (100) positioniert wird, um Zirkulation der internen Luft zwischen dem Wärmetauscher und der zu kühlenden Vorrichtung bereitzustellen.

6. Luft-Luft-Wärmetauscher nach Patentanspruch 5, **dadurch gekennzeichnet, dass** jedes Umluftgebläse (331, 341) durch einen Antriebsmotor (330, 340) angetrieben wird, der außerhalb des ersten Gehäuses (100) an jeder Stirnwand (111, 112) des ersten Gehäuses (100) positioniert ist.

7. Luft-Luft-Wärmetauscher nach einem der Patentansprüche 1 bis 6, **dadurch gekennzeichnet, dass** die Austrittsöffnungen (136, 146) am zweiten Ende (130B, 140B) der Seitenrohre (130, 140) mit einem Anschlussrohr (200) verbunden sind.

8. Luft-Luft-Wärmetauscher nach einem der Patentansprüche 1 bis 7, **dadurch gekennzeichnet, dass** der Wärmetauscher für die Kühlung einer elektrischen Maschine (10) verwendet wird, die einen Rotor (30) auf einer drehbaren Welle (20) mit einer Mittelachse (A-A), die sich in Richtung der Seitenwände (113, 114) des ersten Gehäuses (100) erstreckt, und einen den Rotor (30) umgebenden Stator (40) aufweist, welche elektrische Maschine (10) innerhalb eines zweiten Gehäuses (60) positioniert ist, wobei heiße Luft von der elektrischen Maschine (10) in Luftdurchlässe (P12) im mittleren Abschnitt des Bodens (115) des ersten Gehäuses (100) geleitet wird und die Rückluft von dem Wärmetauscher durch Luftdurchlässe (P11, P13) an beiden Endabschnitten des Bodens (115) des ersten Gehäuses (100) zu den gegenüberliegenden Enden der elektrischen Maschine (10) zurückgeleitet wird.

## Revendications

1. Échangeur de chaleur air-air comprenant :
un premier logement (100) comprenant deux parois d'extrémité opposées (111, 112), deux parois latérales opposées (113, 114), un plancher (115) et un plafond (116),
deux unités d'échange de chaleur (160, 180) comprenant des canaux d'air (161, 162, 181, 182), s'étendant entre les parois latérales (113, 114) du premier logement (100), les deux unités d'échange de chaleur (160, 180) divisant l'intérieur du premier logement (100) en une section centrale (170) située entre les deux unités d'échange de chaleur (160, 180) et deux sections d'extrémité (150, 190) situées entre la paroi d'extrémité respective (111, 112) du logement (100) et l'unité d'échange de chaleur respective (160, 180),
l'échangeur de chaleur comprend en outre :
un conduit latéral (130, 140) de chaque côté du logement (100) s'étendant le long de la paroi latérale respective (113, 114) du logement (100) et comprenant une première extrémité (130A, 140A) et une seconde extrémité opposée (130B, 140B), **caractérisé en ce que** ledit conduit latéral (130, 140) est divisé par une paroi de séparation (119, 120) s'étendant entre la première extrémité (130A, 140A) et la seconde extrémité opposée (130B, 140B) du conduit latéral (130, 140) dans un compartiment supérieur (131, 141) et un compartiment inférieur (132, 142), ledit conduit latéral (130, 140) comprenant une ouverture d'entrée (135, 145) à la première extrémité (130A, 140A) du conduit latéral (130, 140) dans l'un des compartiments (131, 132, 141, 142) et une ouverture de sortie (136, 146) à la seconde extrémité (130B, 140B) du compartiment correspondant (131, 132, 141, 142) dans le conduit latéral opposé (130, 140).

2. Échangeur air-air selon la revendication 1, **caractérisé en ce que**
une circulation d'air de refroidissement extérieure (L1, L2) est dirigée dans l'échangeur de chaleur depuis les ouvertures d'entrée (135, 145) des deux conduits latéraux (130, 140) dans le compartiment respectif (131, 132, 141, 142) dans le conduit latéral (130, 140) et en outre à travers les canaux d'air (161, 162, 181, 182) dans les unités d'échange de chaleur (160, 180) au compartiment correspondant (131, 132, 141, 142) dans le conduit latéral opposé (130, 140) et en outre à travers l'ouverture de sortie (136, 146) dans le conduit latéral opposé (130, 140) hors de l'échangeur de chaleur,
une circulation d'air interne (L10) est dirigée depuis un appareil à refroidir positionné sous le premier logement (100) à travers les passages d'air (P12) dans une partie centrale du plancher (115) du premier logement (100) et ultérieurement vers le haut dans la section centrale (170) du premier logement (100), où la circulation d'air interne (L10) est divisée en une première ramification (L11) passant à travers la première unité d'échange de chaleur (160) dans le premier logement (100) à la première section d'extrémité (150) dans le premier logement (100) et ultérieurement vers le bas à travers les passages d'air (P11) dans une première partie d'extrémité du plancher (115) du premier logement (100), pour revenir à une première extrémité de l'appareil à refroidir et en une seconde ramification (L12) passant à travers la seconde unité d'échange de chaleur (180) dans le premier logement (100) jusqu'à la seconde section d'extrémité (190) dans le premier logement (100) et ultérieurement vers le bas à travers des passages d'air (P13) dans une seconde partie d'extrémité du plancher (115) du premier logement (100) pour revenir à une seconde extrémité opposée de l'appareil à refroidir.

3. Échangeur de chaleur air-air selon la revendication 1 ou 2, **caractérisé en ce que** les canaux d'air (161, 162, 181, 182) sont formés de tuyaux ayant une section transversale circulaire.

4. Échangeur de chaleur air-air selon l'une quelconque des revendications 1 à 3, **caractérisé en ce qu'**un ventilateur d'air de refroidissement (310, 320) est positionné à chaque ouverture d'entrée (135, 145) pour fournir de l'air de refroidissement extérieure (L1, L2) à l'échangeur de chaleur.

5. Échangeur de chaleur air-air selon l'une quelconque des revendications 1 à 4, **caractérisé en ce qu'**un ventilateur d'air de circulation (331, 341) est positionné dans chaque section d'extrémité (150, 190) du premier logement (100) pour permettre la circulation de l'air interne entre l'échangeur de chaleur et l'appareil à refroidir.

6. Échangeur de chaleur air-air selon la revendication 5, **caractérisé en ce que** chaque ventilateur d'air de circulation (331, 341) est entraîné par un moteur de commande (330, 340) positionné à l'extérieur du premier logement (100) au niveau de chaque paroi d'extrémité (111, 112) du premier logement (100).

7. Échangeur de chaleur air-air selon l'une quelconque des revendications 1 à 6, **caractérisé en ce que** les ouvertures de sortie (136, 146) au niveau de la seconde extrémité (130B, 140B) des conduits latéraux (130, 140) sont raccordées avec un conduit de jonction (200).

8. Échangeur de chaleur air-air selon l'une quelconque des revendications 1 à 7, **caractérisé en ce que** l'échangeur de chaleur est utilisé pour refroidir une machine électrique (10) comprenant un rotor (30) sur un arbre rotatif (20), ayant un axe central (A-A) s'étendant dans la direction des parois latérales (113, 114) du premier logement (100) et un stator (40) entourant le rotor (30), la machine électrique (10) étant positionnée dans un second logement (60), moyennant quoi de l'air chaud provenant de la machine électrique (10) est dirigé vers des passages d'air (P12) dans la section centrale du plancher (115) du premier logement (100) et l'air de retour provenant de l'échangeur de chaleur est renvoyé à travers des passages d'air (P11, P13) aux deux sections d'extrémité du plancher (115) du premier logement (100) vers les extrémités opposées de la machine électrique (10).
